# EUROPEAN PATENT SPECIFICATION

(11) **EP 0 952 932 B1**
(45) Date of publication and mention of the grant of the patent: **18.04.2001**
(21) Application number: 98900586.3
(22) Date of filing: 12.01.1998
(51) Int. Cl.: B60K 6/04, B60L 11/12

(54) **HYBRID VEHICLE POWERTRAIN CONTROL**
STEUERUNG FÜR FAHRZEUG MIT HYBRIDANTRIEB
COMMANDE DU GROUPE TRANSMISSION D'UN VEHICULE HYBRIDE

(30) Priority: 17.01.1997 GB 9700960
(43) Date of publication of application: 03.11.1999
(73) Proprietor: Bayerische Motoren Werke Aktiengesellschaft, 80809 München (DE)
(72) Inventor: BOURNE, Carl, Kenilworth Warwickshire CV8 2GD (GB)
(74) Representative: Bullwein, Fritz
(86) International application number: GB9800092
(87) International publication number: WO9831559

(56) References cited:
- EP-A- 0 724 979
- US-A- 5 713 425

## Description

The present invention relates to hybrid vehicles which have two sources of power: an engine and a motor.

It is known to provide a vehicle powertrain having an internal combustion engine connected to a gearbox via a clutch, a propeller shaft for transmitting torque from the gearbox to a differential, and an electric motor which operates in parallel with the engine and supplies torque to the propeller shaft.

It is a problem with conventional off-road vehicles, which have an engine as the only source of power, that changing gear on a steep hill, because it includes a momentary loss of drive torque, can result in a loss of control of the vehicle. If the vehicle is travelling up hill it can, in extreme conditions, start to roll backwards during a gear change. If the vehicle is descending a hill in conditions such that the engine is producing a braking effect, the vehicle can accelerate to an undesirably high speed during gear change.

It is also a problem with vehicles with manual transmissions that, when they are driven on high friction or viscous surfaces such as sand or mud, the driver is often unable to change up a gear. This is because as soon as the driver disengages the clutch the high drag experienced by the wheels will slow the vehicle, and hence the speed of rotation of the transmission output shaft, so that it is too slow to be engaged to the input shaft and engine at the desired gear ratio. In extreme conditions, by the time the driver realises that the gear change will not be possible, the vehicle has slowed so much that the original gear ratio is also too high. the inability to change gear freely imposes a speed restriction upon the vehicle and also creates the possibility of it being driven in an inappropriate gear increasing fuel consumption and wear.

The present invention aims to provide a hybrid vehicle which can at least partially overcome these problems.

Accordingly the present invention provides hybrid powertrain system for a vehicle, the powertrain comprising an engine, drive means for transmitting drive torque to at least one driven wheel, gear change means connecting the engine to the drive means and having an input connected to the engine and an output connected to the drive means and being arranged to produce stepped changes in the drive ratio between the input and the output, and an electric motor arranged to supply torque to the drive means, characterized in that it further comprises control means arranged to control the motor to compensate for temporary reduction in the magnitude of the torque transmitted from the engine to the drive means during a change in ratio of the gear change means.

The gear change means can comprise a manual gearbox and a clutch, or an electrically controlled 'manual' gearbox and clutch, or an automatic gearbox.

Preferred embodiments of the present invention will now be described by way of example only with reference to the accompanying drawings in which:
Figure 1 is a diagrammatic representation of a powertrain system according to a first embodiment of the invention, and
Figure 2 is a diagrammatic representation of a powertrain system according to a third embodiment of the invention.

A vehicle 10 has a pair of driven wheels 12 driven by drive shafts 14 from a differential 16. The input of the differential is driven by a propeller shaft 18, which is also connected to the output of a manual gearbox 20, the input of which is connected via a clutch 22 to an internal combustion engine 23. An electric motor 24, powered by a rechargeable battery forming part of the vehicle, has its output coupled to the propeller shaft 18 by means of a motor coupling 25. The vehicle further comprises a powertrain control unit in the form of a vehicle management unit (V.M.U.) 26, and an accelerator pedal 27 by means of which a driver of the vehicle indicates the torque desired from the powertrain. An accelerator pedal position potentiometer 28 produces a torque demand signal, dependant on the position of the accelerator pedal, which is input to the V.M.U. 26. Further inputs to the V.M.U. are provided by signals from a clutch condition sensor 30, which produces a signal dependant on the state of engagement of the clutch, wheel speed sensors 32 which produce signals dependent on the speed of rotation of each of the driven wheels 12.

During normal operation the V.M.U. 26 sends out a torque demand signal to the motor 24 and a throttle angle demand signal to the engine 23 to control the amount of torque produced by both the engine 23 and the motor 24. The torque required from each of the engine 23 and motor 24 is derived from a map stored in the V.M.U. relating the required torques to the input signals representing engine speed, accelerator pedal position and wheel speed.

While the gearbox 20 remains in one particular gear and the clutch remains engaged, the torque from the engine 20 and motor 40 can be controlled smoothly so as to provide the required amount of torque to the wheels. However, when the clutch is disengaged, the torque supplied by the engine to the wheels is suddenly reduced to zero. The V.M.U. is arranged to compensate for this as follows.

If the powertrain is providing a positive driving torque to the wheels, then disengagement of the clutch will result in a reduction in the positive driving torque supplied by the engine. However, the V.M.U. has a target value for the total torque which is required, this being simply the sum of the torques being demanded of the motor 24 and engine 23. Therefore, when the clutch sensor 30 sends a signal to the V.M.U. 26 that the clutch is disengaged, the V.M.U. controls the motor 24 to provide the total torque required. Then, when the clutch sensor 30 sends a signal to the V.M.U. indicating that the clutch is re-engaged, the V.M.U. 26 can return to its normal mode of operation, wherein the required torque is provided by the motor 24 and the engine 20.

If the powertrain is providing a braking torque, this braking torque will also be controlled by the V.M.U. 26 dependent on the vehicle speed and the throttle pedal position. Braking torque will generally be controlled so as to provide the desired driving characteristics, and the braking torque provided by the motor 24 will usually be used to re-charge the vehicle's battery. Therefore, if the clutch is disengaged, the V.M.U. has a target braking torque which it is trying to provide to the wheels. It therefore controls the motor 24 so as to provide the total braking torque required. When the clutch sensor 30 sends a signal to the V.M.U. that the clutch is re-engaged, the V.M.U. returns to its normal operation whereby the required torque is provided by the engine 23 and the motor 24.

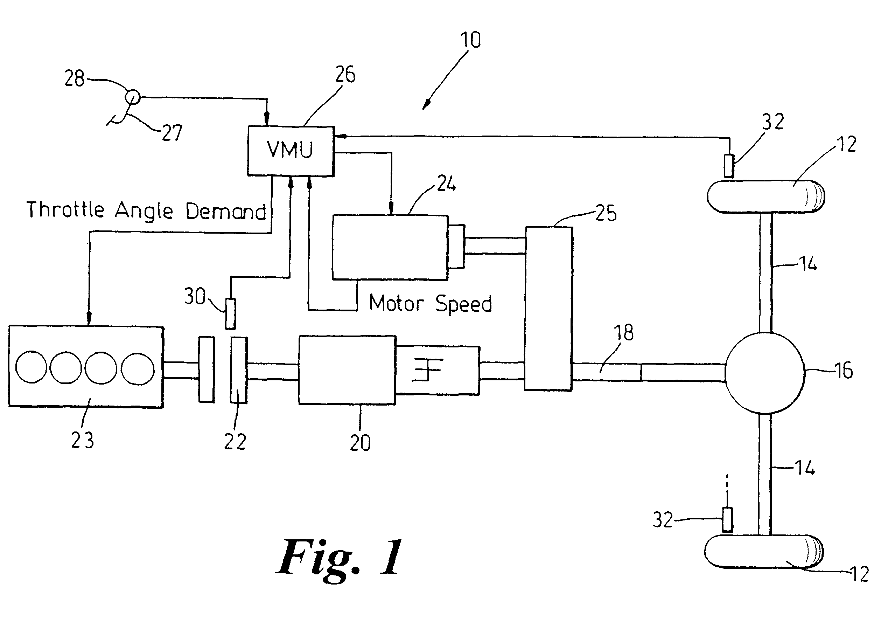

A second embodiment of the invention includes features corresponding to all of those in the first embodiment, as shown in Figure 1. However, the operation of the system is different. When the clutch sensor 30 sends a signal to the V.M.U. indicating that the clutch is disengaged, the V.M.U. records the instantaneous vehicle speed measured by the wheel speed sensors 32. During the time when the clutch is disengaged during a gear shift, i.e. until the clutch sensor 30 indicates that the clutch has been re-engaged, the V.M.U. is arranged to control the motor 24 in a 'closed loop' manner so as to keep the vehicle speed, as measured by the wheel speed sensors 32, constant. If the vehicle is climbing a hill at the time of the gear change, the driving torque of the motor 24 will have to be increased to maintain the vehicle speed, whereas if the vehicle is descending a hill, then the motor will have to be controlled so as to apply a braking torque to the wheels during the gear change.

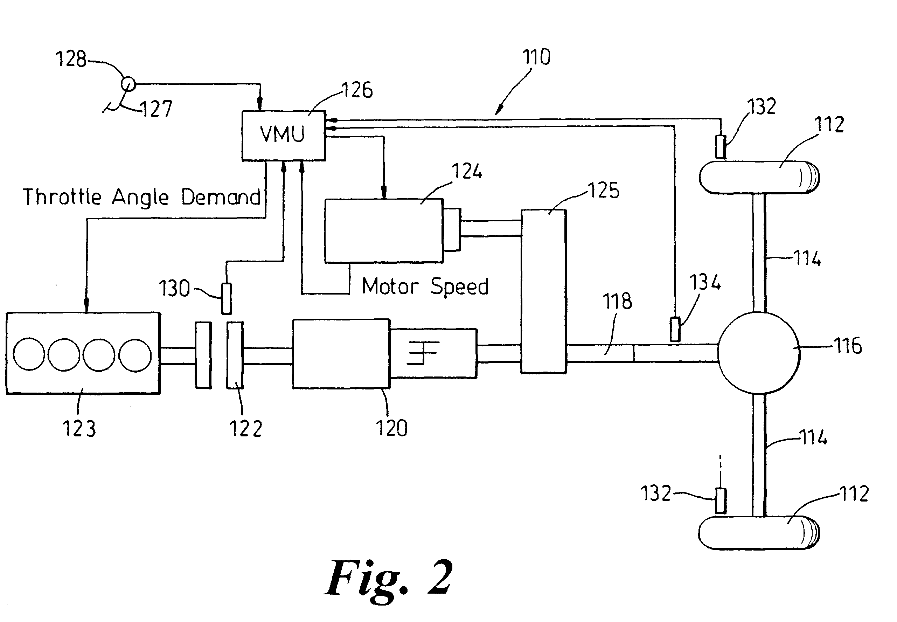

Referring to Figure 2, a third embodiment of the invention includes all of the features of the system of Figure 1, which are indicated by corresponding reference numerals preceded by a 1. The vehicle further comprises a torque sensor 134 which sends a signal to the V.M.U. 126 indicating the torque in the propeller shaft 118. When the clutch sensor 130 sends a signal to the V.M.U. indicating that the clutch 122 is disengaged, the V.M.U. records the instantaneous torque in the propeller shaft 118 as measured by the torque sensor 134. During the time when the clutch 122 is disengaged during a gear shift, i.e. until the clutch sensor 130 indicates that the clutch 122 has been re-engaged, the V.M.U. is arranged to control the motor 124 in a 'closed loop' manner so as to keep the measured torque in the propeller shaft 118 constant.

In a fourth embodiment the system operates as in the third embodiment except that, rather than a constant torque, the VMU is arranged to control the motor 124 so that the torque in the propeller shaft 118 corresponds to that demanded by the driver, i.e. it is dependent on the position of the accelerator pedal 127. This has the advantage that the driver can control the amount of torque supplied to the wheels during a gear change.

It will be appreciated that the present invention can have significant advantages, particularly in off-road driving. If a vehicle is climbing a steep slope, any loss of torque, even for a short period, can result in the vehicle slowing down rapidly or even slipping backwards. In conventional manual, or even automatic, gearboxes, this can make changing gear in such conditions difficult. Similarly, if the vehicle is descending a steep slope, the engine or motor are usually used to provide controlled braking, which will be lost in conventional systems on changing gear. This can lead rapidly to the vehicle 'running away' and the driver losing control. The preferred embodiments of the present invention described above enable the driver to change gear during ascent or descent of a hill without losing a significant amount of driving or braking torque.

## Claims

1. A hybrid powertrain system for a vehicle, the powertrain comprising an engine (23; 123), drive means (25; 125), for transmitting drive torque to at least one driven wheel, gear change means (20; 120) connecting the engine to the drive means and having an input connected to the engine and an output connected to the drive means and being arranged to produce stepped changes in the drive ratio between the input and the output, and an electric motor (24; 124) arranged to supply torque to the drive means, characterized in that it further comprises control means (26; 126) arranged to control the electric motor (24; 124) to compensate for temporary reduction in the magnitude of the torque transmitted from the engine (23; 123) to the drive means (25; 125) during a change in ratio of the gear change means (20; 120).

2. A system according to claim 1 wherein the electric motor can be controlled to compensate for reductions in driving torque and reductions in braking torque transmitted from the engine to the driven wheel.

3. A system according to claim 1 or claim 2 wherein the control means is arranged so to compensate in response to a signal from a ratio change detection means.

4. A system according to claim 3 further comprising a clutch system (22; 122), wherein the ratio change detection means is arranged to detect the occurrence of a ratio change by detecting the operation of the clutch system.

5. A system according to any foregoing claim further comprising vehicle speed detecting means (32; 132) wherein the control means is arranged so to compensate by controlling the electric motor to maintain a constant vehicle speed during a ratio change.

6. A system according to any one of claims 1 to 4 further comprising torque measuring means (134) for measuring the torque transmitted by the drive means (125), wherein the control means is arranged so as to compensate by controlling the motor to maintain said torque constant during a ratio change.

7. A system according to any one of claims 1 to 4 wherein the control means is arranged so to compensate by controlling the motor to respond to a torque demand from a driver of the vehicle.

## Patentansprüche

1. Hybridkraftübertragungssystem für ein Fahrzeug, bei dem die Kraftübertragung einen Verbrennungsmotor 23, Antriebsmittel, die Antriebsdrehmoment auf mindestens ein angetriebenes Rad 12 übertragen, Gangwechselmittel 20, die den Verbrennungsmotor mit den Antriebsmitteln verbinden und einen mit dem Verbrennungsmotor verbundenen Eingang und einen mit den Antriebsmitteln verbundenen Ausgang besitzen und so vorgesehen sind, daß sie stufenweise Änderungen im Antriebsverhältnis zwischen dem Eingang und dem Ausgang bewirken, sowie einen Elektromotor 24, 124 umfaßt, der so vorgesehen ist, daß er die Antriebsmittel mit Drehmoment versorgt, dadurch gekennzeichnet, daß sie weiterhin Steuerungsmittel 26, 126 umfaßt, die so vorgesehen sind, daß sie den Elektromotor 24, 124 so steuern, daß eine temporäre Reduzierung der Größenordnung des Drehmoments, das während einer Änderung des Verhältnisses der Gangwechselmittel 20 vom Verbrennungsmotor 23 auf die Antriebsmittel übertragen wird, kompensiert werden kann.

2. System nach Anspruch 1, bei dem der Elektromotor 24, 124 so gesteuert werden kann, daß Reduzierungen im Antriebsdrehmoment und Reduzierungen im Bremsdrehmoment, die vom Verbrennungsmotor 23 auf das angetriebene Rad 12 übertragen werden, kompensiert werden können.

3. System nach Anspruch 1 oder Anspruch 2, bei dem die Steuerungsmittel 26, 126 so vorgesehen sind, daß in Reaktion auf ein Signal von einem Verhältnisänderungserfassungsmittel eine Kompensation erfolgen kann.

4. System nach Anspruch 3, weiterhin umfassend ein Kupplungssystem, bei dem das Verhältnisänderungserfassungsmittel so vorgesehen ist, daß das Auftreten einer Verhältnisänderung durch Erfassen des Betriebs des Kupplungssystems festgestellt werden kann.

5. System nach einem der vorstehenden Ansprüche, weiterhin umfassend Fahrzeuggeschwindigkeitserfassungsmittel, bei dem die Steuerungsmittel so vorgesehen sind, daß durch Steuerung des Elektromotors 24, 124 eine Kompensation erfolgen kann, um eine konstante Fahrzeuggeschwindigkeit während einer Verhältnisänderung aufrechtzuerhalten.

6. System nach einem der Ansprüche 1 bis 4, weiterhin umfassend Drehmomentmeßmittel zur Messung des von den Antriebsmitteln übertragenen Drehmoments, bei dem die Steuerungsmittel 26, 126 so vorgesehen sind, daß durch Steuerung des Elektromotors 24, 124 eine Kompensation erfolgen kann, um das Drehmoment während einer Verhältnisänderung konstant zu halten.

7. System nach einem der Ansprüche 1 bis 4, bei dem die Steuerungsmittel 26, 126 so vorgesehen sind, daß durch Steuerung des Elektromotors 24, 124 eine Kompensation erfolgen kann, um auf einen Drehmomentbedarf von einem Fahrer des Fahrzeugs reagieren zu können.

## Revendications

1. Groupe d'entraînement hybride de véhicule, comportant un moteur à combustion interne (23, 123), un moyen d'entraînement (25, 125) pour transmettre le couple moteur à au moins une roue motrice, un moyen de changement de vitesse (20, 120) reliant le moteur au moyen d'entraînement et ayant une entrée reliée au moteur ainsi qu'une sortie reliée au moyen d'entraînement, et fournissant des rapports de vitesses étagés entre l'entrée et la sortie, ainsi qu'un moteur électrique (24, 124) fournissant un couple au moyen d'entraînement,
caractérisé en ce qu'
il comporte en outre un moyen de commande (26, 126) pour commander le moteur électrique (24, 124) et compenser la réduction temporaire d'amplitude du couple transmis par le moteur à combustion interne (23, 123) au moyen d'entraînement (25, 125) pendant le changement de rapport dans la boîte de vitesses (20, 120).

2. Système selon la revendication 1,
caractérisé en ce que
le moteur électrique (24, 124) est commandé pour compenser des réductions de couple d'entraînement et des réductions de couple de freinage transmises par le moteur aux roues motrices.

3. Système selon la revendication 1 ou 2,
caractérisé en ce que
le moyen de commande sert à compenser en fonction du signal fourni par le moyen de détection de changement de rapport de vitesses.

4. Système selon la revendication 3,
caractérisé en ce qu'
il comprend un système d'embrayage (22, 122) avec un moyen de détection de changement de rapport pour détecter un changement de rapport en détectant le fonctionnement de l'embrayage.

5. Système selon l'une quelconque des revendications précédentes,
caractérisé en ce qu'
il comprend en outre un moyen de détection (32, 132) de la vitesse du véhicule, et le moyen de commande compense en commandant le moteur électrique pour maintenir constante la vitesse du véhicule pendant le changement de rapport.

6. Système selon l'une quelconque des revendications 1 à 4,
caractérisé en ce qu'
il comporte un moyen de mesure de couple (134) pour mesurer le couple transmis par le moyen d'entraÎnement (125), le moyen de commande assurant la compensation en commandant le moteur pour maintenir le couple constant pendant le changement de rapport.

7. Système selon l'une quelconque des revendications 1 à 4,
caractérisé en ce que
le moyen de commande compense en commandant le moteur pour répondre à une demande de couple émise par le conducteur du véhicule.
